# EUROPEAN PATENT APPLICATION

(11) **EP 4 681 823 A1**
(43) Date of publication of application: **21.01.2026**
(21) Application number: 24913509.6
(22) Date of filing: 23.12.2024
(51) Int. Cl.: B05B 13/04, H01M 4/04, B05B 1/20, B05B 13/02, B05B 1/30, F26B 21/00

(54) **WATER SPRAYING DEVICE AND ELECTRODE DRYING DEVICE INCLUDING SAME**

(30) Priority: 26.12.2023 KR 20230191015
(71) Applicant: LG Energy Solution, Ltd., Seoul 07335 (KR)
(72) Inventor: CHOI, Hyun Bae, Daejeon 34122 (KR); JEONG, Byeong Oh, Daejeon 34122 (KR); KO, Young Kuk, Daejeon 34122 (KR); KIM, Ji Hwan, Daejeon 34122 (KR); LEE, Jeong Won, Daejeon 34122 (KR); LEE, Jae Poong, Daejeon 34122 (KR)
(74) Representative: Plasseraud IP
(86) International application number: PCT/KR2024/020957
(87) International publication number: WO 2025/143716

(57) **Abstract**

The present disclosure relates to a water spraying device and an electrode drying device including the same, wherein the water spraying device of the present disclosure includes: a base part; a spraying part including at least one spray nozzle for spraying fluid; and an adjusting part that connects the spraying part to the base part and linearly moves and rotationally moves the spraying part with respect to the base part, wherein the spray nozzle is characterized in that it is configured to move horizontally and vertically, or rotate in an arc by the adjusting part.

## Description

### [Technical Field]

The present disclosure relates to a water spraying device and an electrode drying device including the same, and more specifically, relates to a device that can minimize thermal wrinkle phenomenon that may occur during the drying process of electrode sheets.

This application claims the benefit of priority from Korean Patent Application No. 10-2023-0191015, filed on December 26, 2023, the entire contents disclosed therein are incorporated by reference into this disclosure.

### [Background]

Types of secondary batteries currently widely used include lithium ion batteries, lithium polymer batteries, nickel cadmium batteries, nickel hydrogen batteries, nickel zinc batteries, etc.

Such secondary batteries are generally formed with an electrode assembly and electrolyte, etc. accommodated inside a battery case.

Here, the electrode assembly is typically composed of a jelly-roll type electrode assembly in which a separator is interposed between long sheet-type positive and negative electrodes and then wound, a stack-type electrode assembly in which rectangular positive and negative electrodes are stacked with a separator interposed therebetween, a stack-folding type electrode assembly in which unit cells are wound with a long separation film, or a lamination-stack type electrode assembly in which battery cells are stacked with a separator interposed therebetween and attached to each other.

Additionally, the electrolyte, besides the commonly used liquid electrolyte, can also be substituted with a solid electrolyte, or a gel-type semi-solid electrolyte that takes an intermediate form between liquid and solid by adding additives to a solid electrolyte.

The above-mentioned electrode assembly is housed in a battery case, and depending on the type of battery case, it can be classified into cylindrical batteries and prismatic batteries in which the electrode assembly is housed in a cylindrical or prismatic metal can, and pouch-type batteries in which the electrode assembly is housed in a pouch-type case made of aluminum laminate sheet.

Meanwhile, as a method for manufacturing electrodes for such secondary batteries, the process includes preparing a slurry by dispersing active materials, conductive materials, and binders in a solvent, coating it on an electrode current collector, and drying it, among other processes.

As a method for drying the electrode, there is a method of inputting and drying a sheet-type electrode sheet in a drying device in a state where it is wound on a roll, but in this case, since it undergoes the drying process in an overlapped state, there is a problem of differences in the degree of drying between the inside and outside.

Therefore, conventionally, an electrode sheet is passed through an oven with an empty interior, and the drying device in the oven is operated to dry the passing electrode sheet.

However, when drying is performed in the above manner, there may be a problem of thermal wrinkles occurring due to excessive heat being transferred to parts where the slurry is not coated.

Conventionally, various attempts have been made to solve the problem of thermal wrinkles occurring in non-coated areas such as the uncoated parts of the electrode sheet, but no significant effects have been achieved.

### [Related Art Document]

Korean Patent Publication No. 10-2023-0067927

### [Summary]

### [Technical Problem]

Therefore, the present disclosure has been devised to solve the above-mentioned problems, and aims to provide a device that can minimize thermal wrinkle phenomenon that may occur during the drying process of electrode sheets.

Other objects and advantages of the present disclosure may be understood from the following description and will become more apparent through embodiments of the present disclosure. In addition, it will be readily appreciated that the objects and advantages of the present disclosure may be realized by the means and combinations thereof as set forth in the appended claims.

### [Technical Solution]

According to the present disclosure, a water spraying device is provided, comprising: a base part; a spraying part including at least one spray nozzle for spraying fluid; and an adjusting part that connects the spraying part to the base part and linearly moves and rotationally moves the spraying part with respect to the base part, wherein the spray nozzle is configured to move horizontally and vertically, or rotate in an arc by the adjusting part.

The spraying part may include: a support bar extending horizontally; a support plate that extends along a longitudinal direction of the support bar and has bent end portions; and the spray nozzle coupled to the support bar.

A plurality of spray nozzles may be coupled to the single support bar, and the plurality of spray nozzles may be arranged at predetermined intervals along the longitudinal direction of the support bar.

The bent end portions of the support plate may be coupled to both ends of the support bar.

The adjusting part may include: a pair of connecting members coupled to both ends of the support plate; and supporters that connect each connecting member to the base plate.

The connecting member may include a slit extending in a vertical direction, and the support plate may include a first fixing pin and a second fixing pin configured to be insertable into the slit of the connecting member at each end portion.

The slit may include a vertical movement slit extending in a straight form and an arc movement slit extending in an arc form, and the connecting member may include: a first connecting member located on one side of the support plate and including the vertical movement slit; and a second connecting member located on the other side of the support plate and including the arc movement slit.

The supporter may include: a first supporter that is axially coupled to the first connecting member; and a second supporter that is coupled to the second connecting member, wherein the second supporter includes a main slit extending in the vertical direction, and the second connecting member includes a third fixing pin configured to be insertable into the main slit of the second supporter.

The support plate may move in the vertical direction guided by the vertical movement slit of the first connecting member and the main slit of the second supporter, and may rotate around a rotation axis guided by the arc movement slit of the second connecting member.

The base plate may include a guide rail extending along a width direction on its upper portion, and the supporter may be coupled to the guide rail so as to be slidable in the width direction of the base plate.

A water pipe supplying water and an air pipe supplying air may be connected to one spray nozzle included in the spraying part, and the spray nozzle may further include a control valve that controls a fluid flow of the water pipe and the air pipe.

According to the present disclosure, an electrode drying device for drying an electrode sheet is provided.

The electrode drying device comprises: an oven main body including a sheet entrance exit that is opened for an electrode sheet to pass through; and the water spraying device stated above that sprays either water or air onto the electrode sheet passing through the sheet entrance exit inside the oven main body.

The oven main body may further include a drying unit that dries the electrode sheet by transferring high-temperature heat to the electrode sheet.

The drying unit may include at least one of an infrared tube emitting infrared rays and a hot air nozzle emitting hot air.

### [Advantageous Effects]

According to the present disclosure, the electrode sheet can be effectively dried.

In addition, according to the present disclosure, the thermal wrinkle phenomenon of the electrode sheet can be minimized, thereby improving the process efficiency.

### [Brief Description of the Drawings]

FIG. 1 is a perspective view of the water spraying device of the present disclosure.
FIG. 2 is another perspective view of the water spraying device of the present disclosure.
FIG. 3 is a plan view and front view of the water spraying device of the present disclosure.
FIG. 4 is a perspective view of the spraying part and adjusting part included in the water spraying device of the present disclosure.
FIG. 5 is another perspective view of the spraying part and adjusting part included in the water spraying device of the present disclosure.
FIG. 6 is a side view of one side of the spraying part and adjusting part included in the water spraying device of the present disclosure.
FIG. 7 is a side view of the other side of the spraying part and adjusting part included in the water spraying device of the present disclosure.
FIG. 8 is an exemplary diagram illustrating the vertical movement of the spraying part and adjusting part included in the water spraying device of the present disclosure.
FIG. 9 is a perspective view illustrating the movement of the spraying part and adjusting part of FIG. 8.
FIG. 10 is another perspective view illustrating the movement of the spraying part and adjusting part of FIG. 8.
FIG. 11 is an exemplary diagram illustrating the rotational movement of the spraying part and adjusting part included in the water spraying device of the present disclosure.
FIG. 12 is another exemplary diagram illustrating the rotational movement of the spraying part and adjusting part included in the water spraying device of the present disclosure.
FIG. 13 is a side view illustrating the rotational movement of the spraying part and adjusting part included in the water spraying device of the present disclosure.
FIG. 14 is a plan view illustrating the horizontal movement of the spraying part and adjusting part included in the water spraying device of the present disclosure.
FIG. 15 is a perspective view of the spray nozzle included in the spraying part of the present disclosure.
FIG. 16 is an exemplary diagram of the operation of the water spraying device of the present disclosure.
FIG. 17 is another exemplary diagram of the operation of the water spraying device of the present disclosure.
FIG. 18 is yet another exemplary diagram of the operation of the water spraying device of the present disclosure.
FIG. 19 is a perspective view of the electrode drying device of the present disclosure.
FIG. 20 is a schematic view briefly illustrating the drying unit included in the electrode drying device of the present disclosure.

### [Detailed Description]

Hereinafter, preferred embodiments of the present disclosure will be described in detail with reference to the accompanying drawings. Before this, terms or words used in the specification and claims should not be interpreted as being limited to their conventional or dictionary meanings, and should be interpreted with meanings and concepts that correspond to the technical spirit of the present disclosure, based on the principle that an inventor can appropriately define the concepts of terms to explain the invention in the best way.

Therefore, the embodiments described in this specification and the configurations shown in the drawings are merely the most preferred embodiments of the present disclosure and do not represent all the technical spirit of the present disclosure. Thus, it should be understood that various equivalents and modifications capable of replacing them may exist at the time of filing this application.

In addition, detailed descriptions of known configurations or functions related to the present disclosure will be omitted when it is determined that they may obscure the gist of the present disclosure.

The embodiments of the present disclosure are provided to more completely explain the present disclosure to those skilled in the art, so the shapes and sizes of the components in the drawings may be exaggerated, omitted, or schematically illustrated for clearer explanation. Therefore, the size or ratio of each component does not fully reflect the actual size or ratio. The present disclosure may have various modifications and various embodiments, and thus specific embodiments thereof will be described in detail below. However, it should be understood that the present disclosure is not limited to the specific embodiments, and includes all modifications, equivalents, or alternatives within the spirit and technical scope of the present disclosure.

In the present disclosure, the term "slit" refers to a through-hole having a long axis that is long in one direction and a short axis that is short in a direction perpendicular to the long axis, and includes cases where the shape is rectangular, oval, or bead-shaped.

The present disclosure relates to a water spraying device and an electrode drying device including the same, wherein the water spraying device of the present disclosure is characterized in that it is possible to selectively spray water and air, and the spray nozzle included in the water spraying device of the present disclosure is configured to be freely movable.

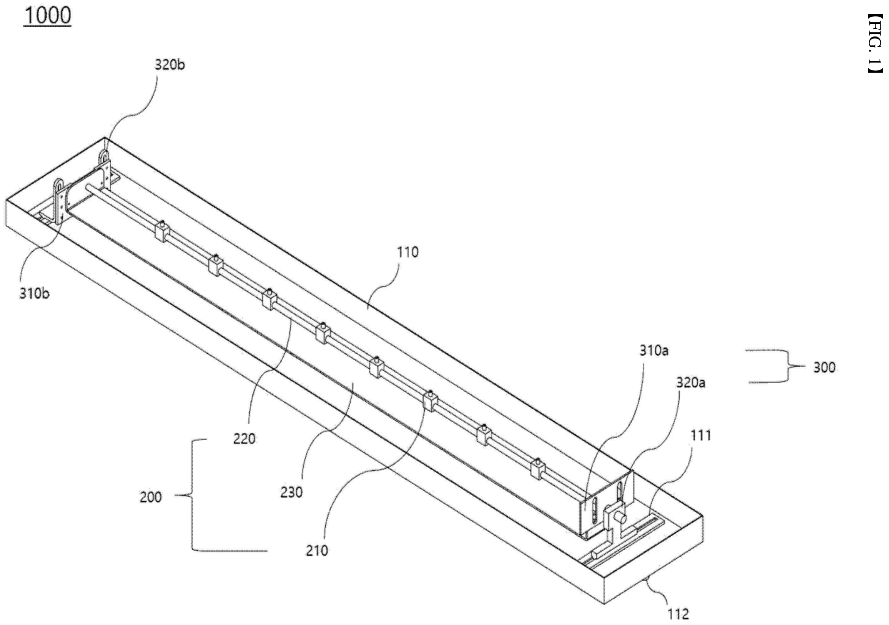

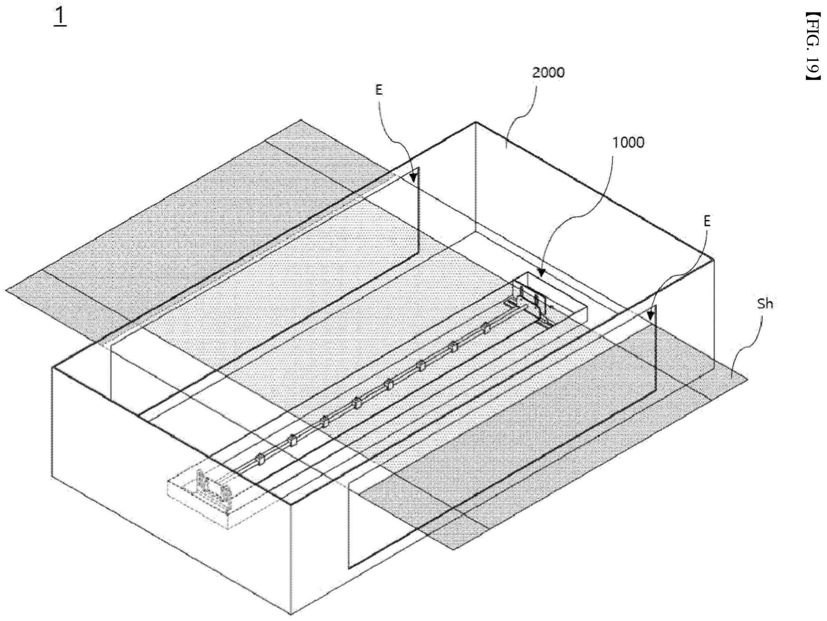

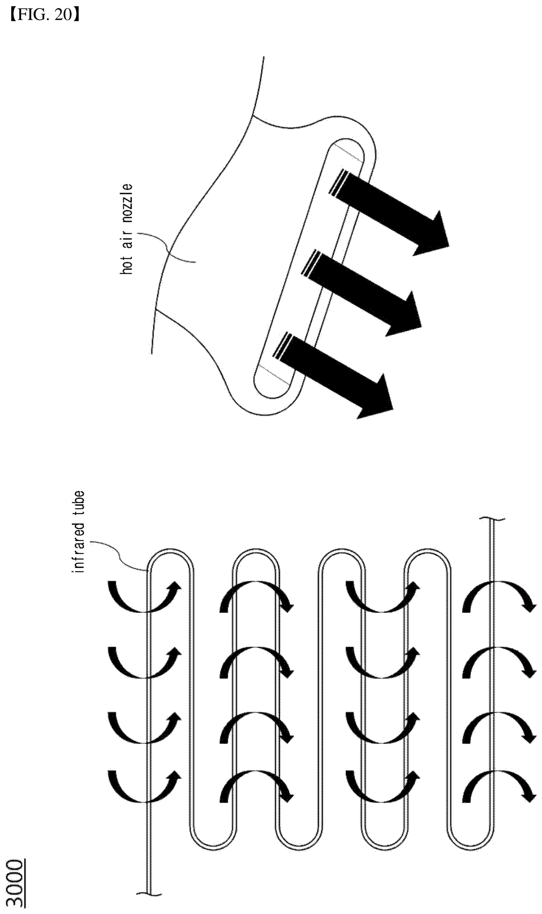

FIG. 1 to FIG. 18 relate to the water spraying device of the present disclosure, and FIG. 19 and FIG. 20 relate to the electrode drying device of the present disclosure.

Hereinafter, specific embodiments of the water spraying device of the present disclosure and the electrode drying device including the same will be described in detail with reference to the accompanying drawings. For reference, the directions specifying relative positions, such as front and back or up, down, left, and right, used in the following description are to help understand the disclosure and, unless specifically defined otherwise, are based on the directions shown in the drawings.

Here, the longitudinal direction of an object refers to the direction of the axis with the longer length among the horizontal axis and vertical axis of the object. Also, the width direction of an object refers to the direction of the axis with the shorter length among the horizontal axis and vertical axis of the object.

### Water Spraying Device 1000

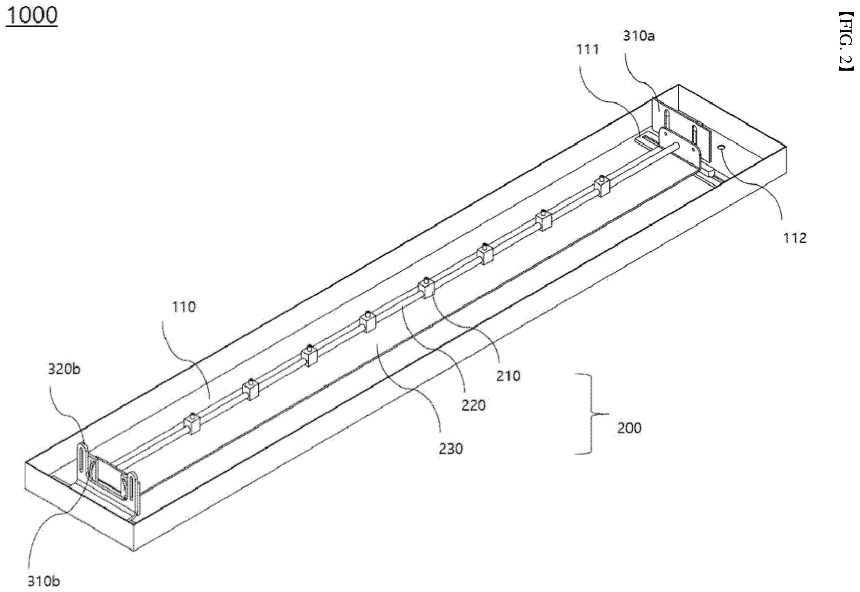

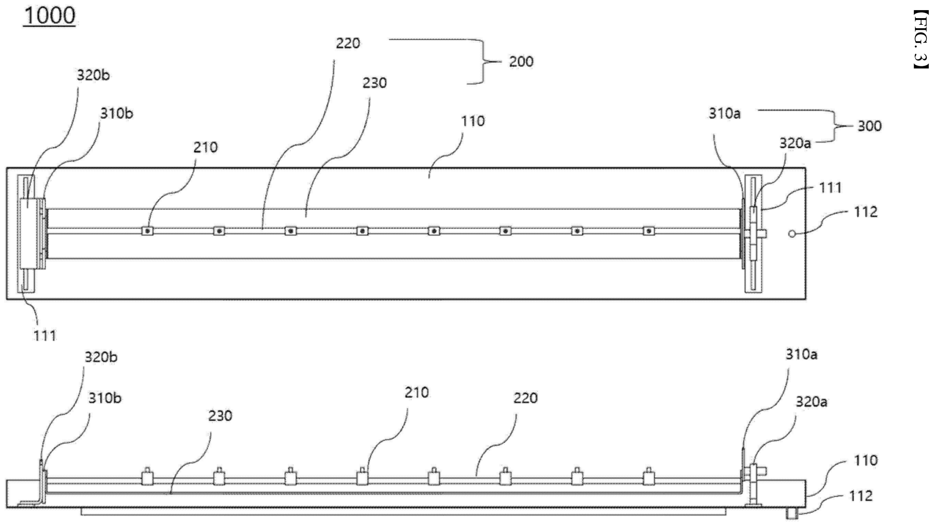

FIG. 1 is a perspective view of the water spraying device 1000 of the present disclosure, FIG. 2 is another perspective view of the water spraying device 1000 of FIG. 1 observed from another direction, and FIG. 3 is a plan view and front view of the water spraying device 1000 of the present disclosure. (However, a portion of the base plate 110 is cut away in Fig. 3 for ease of understanding.)

The water spraying device 1000 of the present disclosure includes a base part, a spraying part 200, and an adjusting part 300 as shown in FIG. 1 to FIG. 3.

The base part includes a base plate 110 that serves to support the lower portion of the spraying part 200 and the adjusting part 300.

The base plate 110 can be formed in various shapes, and as shown in FIG. 1 to FIG. 3, it may be in a basket shape with its edges bent upward toward the upper portion.

A separate drainage hole 112 for discharging liquids such as water may also be formed in the bottom of the base plate 110.

The base plate 110 includes a pair of guide rails 111 extending along the width direction of the base plate 110 on its upper portion.

The spraying part 200 and the adjusting part 300 are coupled to the base plate 110 through the guide rails 111.

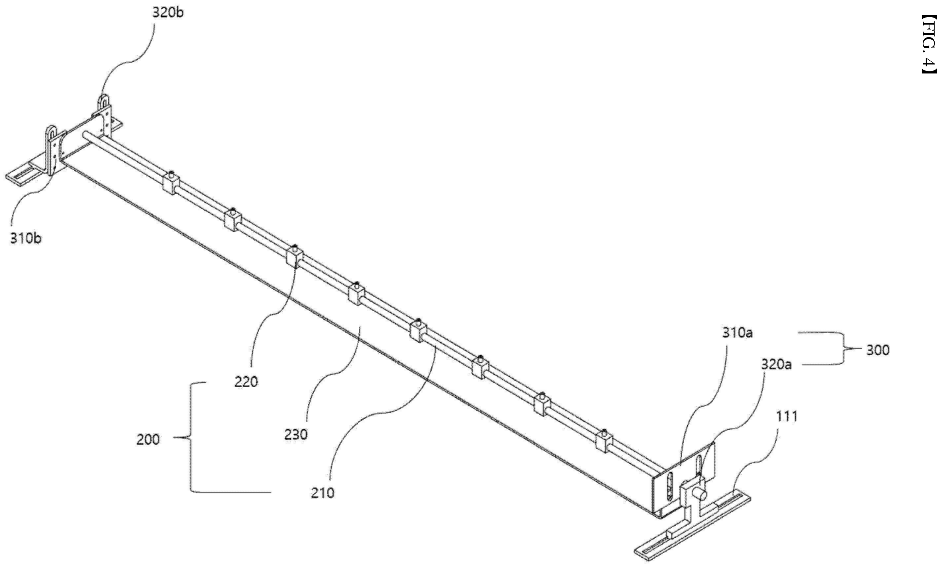

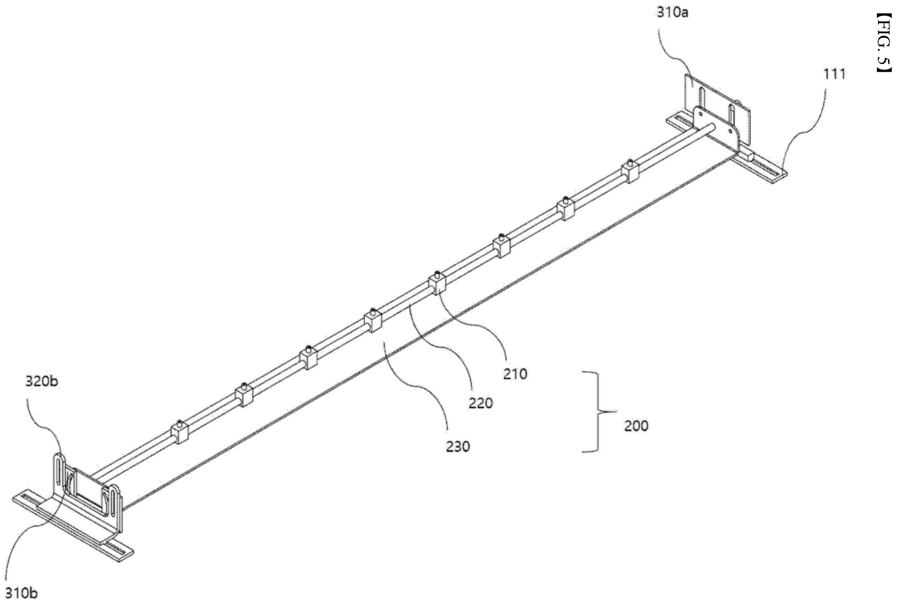

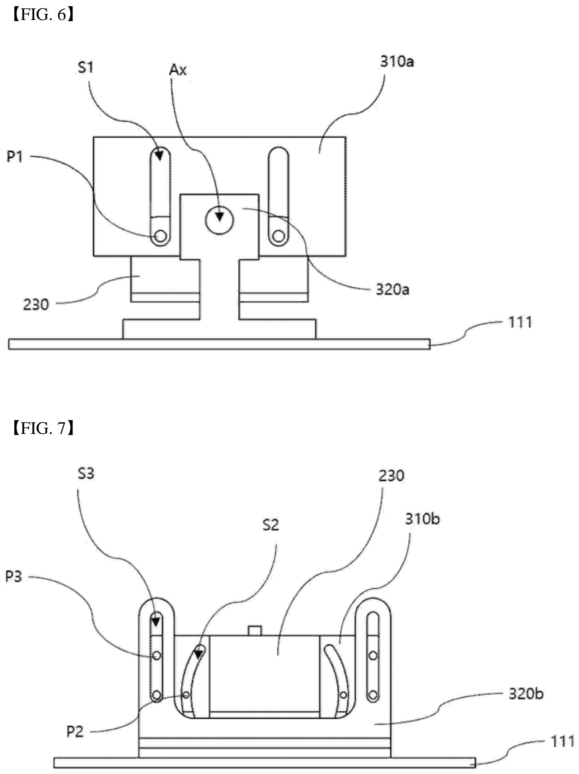

FIG. 4 is a perspective view of the spraying part 200 and adjusting part 300 included in the water spraying device 1000 of the present disclosure, FIG. 5 is another perspective view of the spraying part 200 and adjusting part 300 included in the water spraying device 1000 of the present disclosure, FIG. 6 is a side view of one side of the spraying part 200 and adjusting part 300 included in the water spraying device 1000 of the present disclosure, and FIG. 7 is a side view of the other side of the spraying part 200 and adjusting part 300 included in the water spraying device 1000 of the present disclosure.

The spraying part 200 includes at least one spray nozzle 210 for spraying fluid.

The spraying part 200 includes a support bar 220, a support plate 230, and a spray nozzle 210. More specifically, the spraying part 200 includes a support bar 220 extending horizontally, a support plate 230 that extends along the longitudinal direction of the support bar 220 and has bent end portions, and a spray nozzle 210 coupled to the support bar 220.

A plurality of spray nozzles 210 are coupled to the single support bar 220 as shown in FIG. 1 to FIG. 5. Specifically, the spray nozzles are arranged at predetermined intervals along the longitudinal direction of the support bar 220.

The spray nozzle 210 is coupled to the support bar 220 to be fixed so as not to shake on the support bar 220. Therefore, the spray nozzle 210 and the support bar 220 may be manufactured as an integrated type.

The spray nozzle 210 sprays fluid supplied from the outside through an opened part, and at this time, the fluid flows into the spray nozzle 210 through a moving pipe coupled to one side of the spray nozzle 210.

The support plate 230 serves to support the support bar 220.

The support plate 230 has its bent end portions coupled to both ends of the support bar 220 as shown in FIG. 4. Therefore, each spray nozzle 210 coupled to the support bar 220 moves in conjunction with the movement of the support plate 230. In other words, it is possible to adjust the spray position of the fluid sprayed through the spray nozzle 210 through the movement of the support plate 230.

The adjusting part 300 serves to connect the spraying part 200 to the base part and to linearly move and rotationally move the spraying part 200 with respect to the base part. In other words, the adjusting part 300 is the part that directly couples to the guide rails 111 of the base plate 110.

The adjusting part 300 includes connecting members 310 and supporters 320 as shown in FIG. 1 to FIG. 7. More specifically, the adjusting part 300 includes a pair of connecting members 310 coupled to both ends of the support plate 230 and supporters 320 that connect each connecting member 310 to the base plate 110.

The connecting member 310 includes a first connecting member 310a located on one side of the support plate 230 and a second connecting member 310b located on the other side of the support plate 230.

In addition, the supporter 320 includes a first supporter 320a coupled to the first connecting member 310a and a second supporter 320b coupled to the second connecting member 310b.

The connecting member 310 includes a slit extending in the vertical direction. The support plate 230 and the connecting member 310 are coupled through the slit. Specifically, the support plate 230 includes fixing pins configured to be insertable into the slit of the connecting member 310 at both end portions, respectively. More specifically, the fixing pins are included on the outer side of the end portion of the support plate 230, that is, on the face opposing the connecting member 310.

The fixing pins have a protruding shape that allows them to be inserted into the slit of the connecting member 310.

The fixing pins are configured to move guided by the shape of the slit. Therefore, the support plate 230 moves in conjunction with the movement of the fixing pins as the fixing pins are guided by the slit of the connecting member 310.

The slit of the connecting member 310 includes a vertical movement slit S1 extending in a straight form and an arc movement slit S2 extending in an arc form.

The pair of connecting members 310 arranged on both sides of the support plate 230 each include slits of different shapes.

Specifically, the first connecting member 310a includes a vertical movement slit S1 as shown in FIG. 6, and the second connecting member 310b includes an arc movement slit S2 as shown in FIG. 7.

More specifically, the first connecting member 310a includes a pair of vertical movement slits S1 formed in parallel and spaced apart by a predetermined interval, and the second connecting member 310b includes a pair of arc movement slits S2 spaced apart in a symmetrically opposing form.

The fixing pins of the support plate 230 include a first fixing pin P1 that is inserted into the vertical movement slit S1 of the first connecting member 310a and a second fixing pin P2 that is inserted into the arc movement slit S2 of the second connecting member 310b.

Therefore, the first fixing pin P1 inserted into the vertical movement slit S1 is configured to be capable of reciprocating only in the vertical direction, and the second fixing pin P2 inserted into the arc movement slit S2 is configured to be capable of reciprocating while drawing an arc.

The first supporter 320a is axially coupled to the first connecting member 310a. Therefore, the first connecting member 310a is configured to be capable of rotating around a rotation axis Ax which is coupled to the first supporter 320a.

The second supporter 320b includes a main slit S3 extending in the vertical direction, and the second connecting member 310b is coupled to the second supporter 320b through the main slit S3. Specifically, the second connecting member 310b includes a third fixing pin P3 configured to be insertable into the main slit S3 of the second supporter 320b on one face opposing the main slit S3, and the second connecting member 310b is coupled to the second supporter 320b as the third fixing pin P3 is inserted into the main slit S3.

It is a characteristic of the present disclosure that the spray nozzle 210 is configured to move horizontally and vertically, or rotate in an arc by the adjusting part 300.

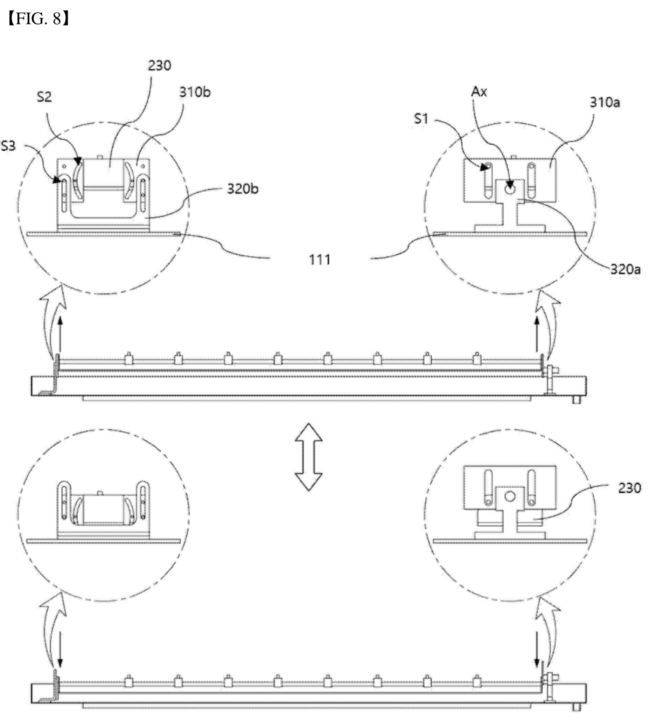

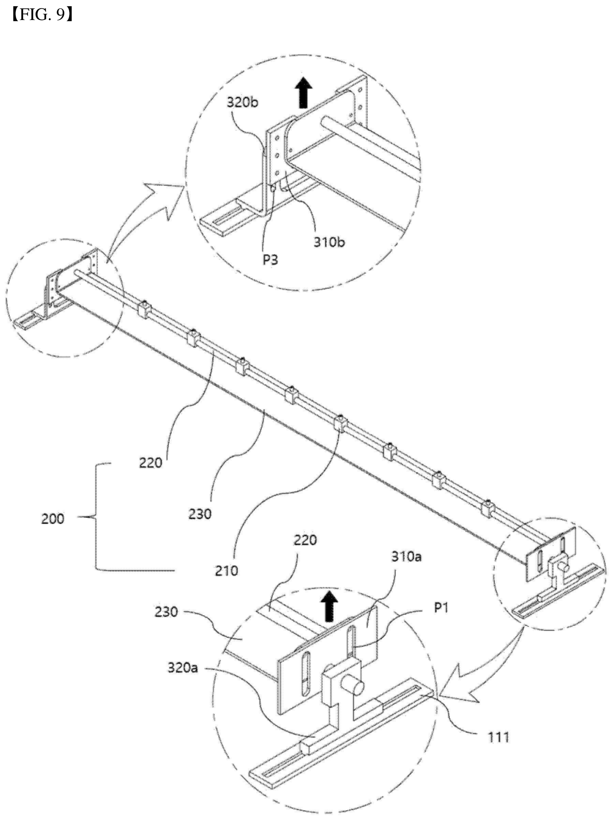

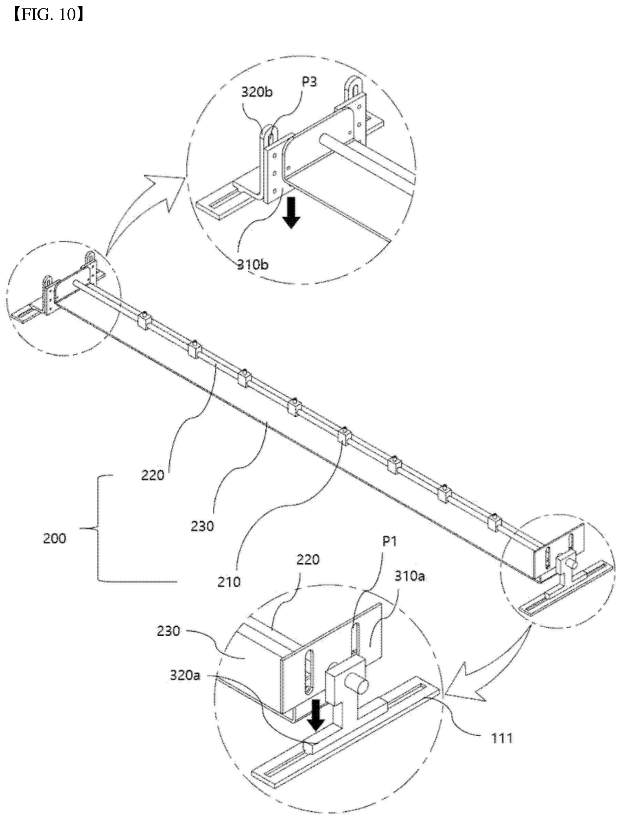

FIG. 8 is an exemplary diagram illustrating the vertical movement of the spraying part 200 and adjusting part 300 included in the water spraying device 1000 of the present disclosure, FIG. 9 is a perspective view illustrating the movement of the spraying part 200 and adjusting part 300 of FIG. 8, and FIG. 10 is another perspective view illustrating the movement of the spraying part 200 and adjusting part 300 of FIG. 8.

The support plate 230 moves in the vertical direction guided by the vertical movement slit S1 of the first connecting member 310a and the main slit S3 of the second supporter 320b as shown in FIG. 8 to FIG. 10.

Specifically, when moving the support plate 230 upward as shown in FIG. 8 and FIG. 9, only the second connecting member 310b moves upward together with the support plate 230. Specifically, the second connecting member 310b connected to one side of the support plate 230 moves upward based on the second supporter 320b, and simultaneously, the other side of the support plate 230 moves directly upward based on the first connecting member 310a. At this time, the first connecting member 310a is restricted from vertical movement as it is axially coupled to the first supporter 320a.

On the other hands, when moving the support plate 230 downward as shown in FIG. 8 and FIG. 10, likewise, only the second connecting member 310b moves downward together with the support plate 230. Specifically, the second connecting member 310b connected to one side of the support plate 230 moves downward based on the second supporter 320b, and simultaneously, the other side of the support plate 230 moves directly downward based on the first connecting member 310a. At this time, the first connecting member 310a is restricted from vertical movement as it is axially coupled to the first supporter 320a.

The support plate 230 moves in the vertical direction by the movement of the first fixing pin P1 configured to slide in the vertical movement slit S1 of the first connecting member 310a.

The second connecting member 310b moves in the vertical direction by the movement of the third fixing pin P3 configured to slide in the main slit S3 of the second supporter 320b as shown in FIG. 8.

Therefore, when adjusting the height of the spray nozzle 210, the support plate 230 and the second connecting member 310b coupled to one side of the support plate 230 are moved simultaneously.

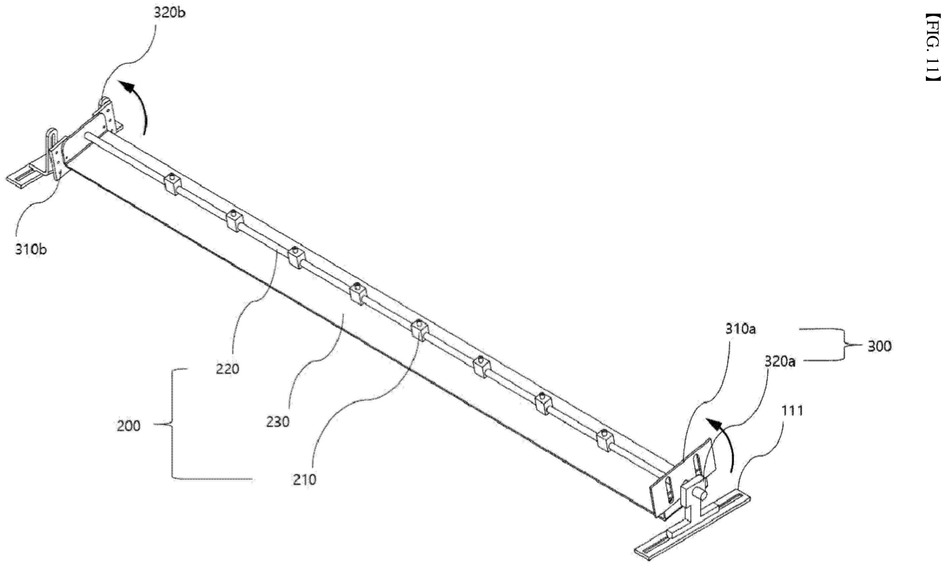

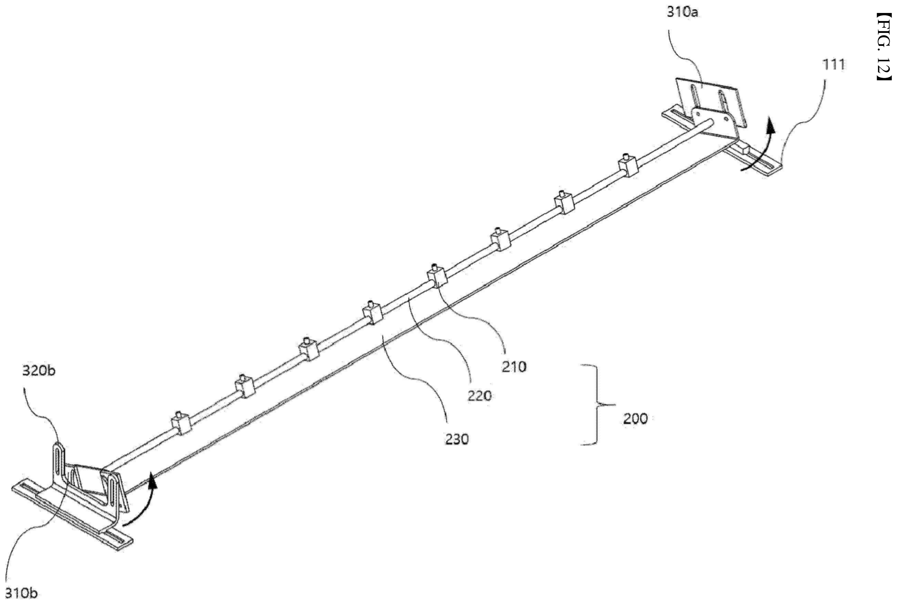

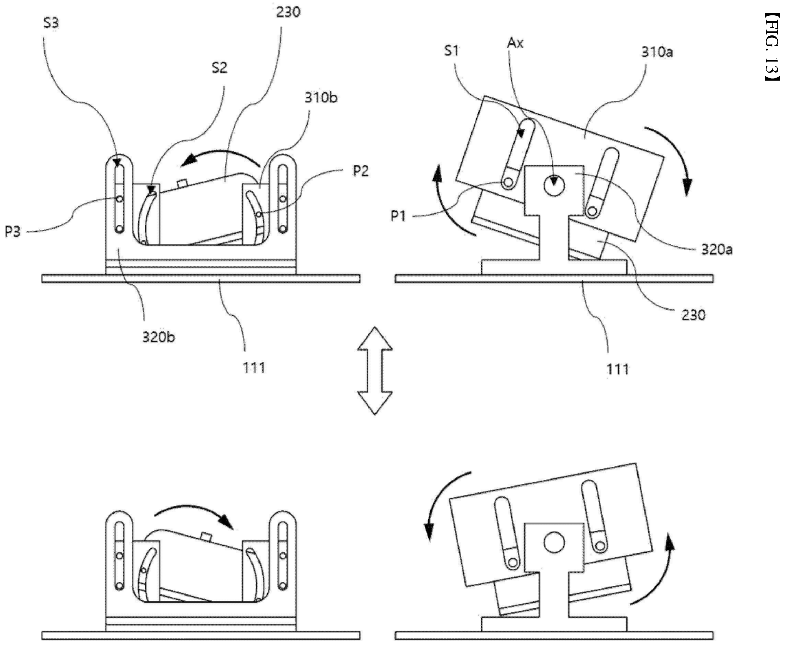

FIG. 11 is an exemplary diagram illustrating the rotational movement of the spraying part 200 and adjusting part 300 included in the water spraying device 1000 of the present disclosure, FIG. 12 is another exemplary diagram illustrating the rotational movement of the spraying part 200 and adjusting part 300 included in the water spraying device 1000 of the present disclosure, and FIG. 13 is a side view illustrating the rotational movement of the spraying part 200 and adjusting part 300 included in the water spraying device 1000 of the present disclosure.

The support plate 230 rotates around the rotation axis Ax guided by the arc movement slit S2 of the second connecting member 310b as shown in FIG. 11 to FIG. 13.

Specifically, when rotating the support plate 230 as shown in FIG. 11 to FIG. 13, only the first connecting member 310a rotates together with the support plate 230.

The third fixing pin P3 included on one side of the support plate 230 is restricted from rotational movement as it is inserted into the vertical movement slit S1 of the first connecting member 310a. Also, the second connecting member 310b connected to the other side of the support plate 230 is restricted from rotational movement as the third fixing pin P3 is inserted into the main slit S3.

However, the other side of the support plate 230 rotates in conjunction with the second fixing pin P2 sliding along the arc movement slit S2, as the second fixing pin P2 is inserted into the arc movement slit S2. At this time, the second fixing pin P2 inserted into one of the pair of arc movement slits S2 slides upward, and the second fixing pin P2 inserted into the other one of the pair of arc movement slits S2 slides downward.

In addition, the first connecting member 310a rotates together with the support plate 230 around the rotation axis Ax as it is axially coupled to the first supporter 320a.

In other words, the support plate 230 rotates by the movement of the second fixing pin P2 configured to slide in the arc movement slit S2 of the second connecting member 310b and by the rotation of the first connecting member 310a that rotates around the rotation axis Ax of the first supporter 320a.

Therefore, when adjusting the tilted angle of the spray nozzle 210, the support plate 230 and the first connecting member 310a coupled to one side of the support plate 230 are rotated simultaneously.

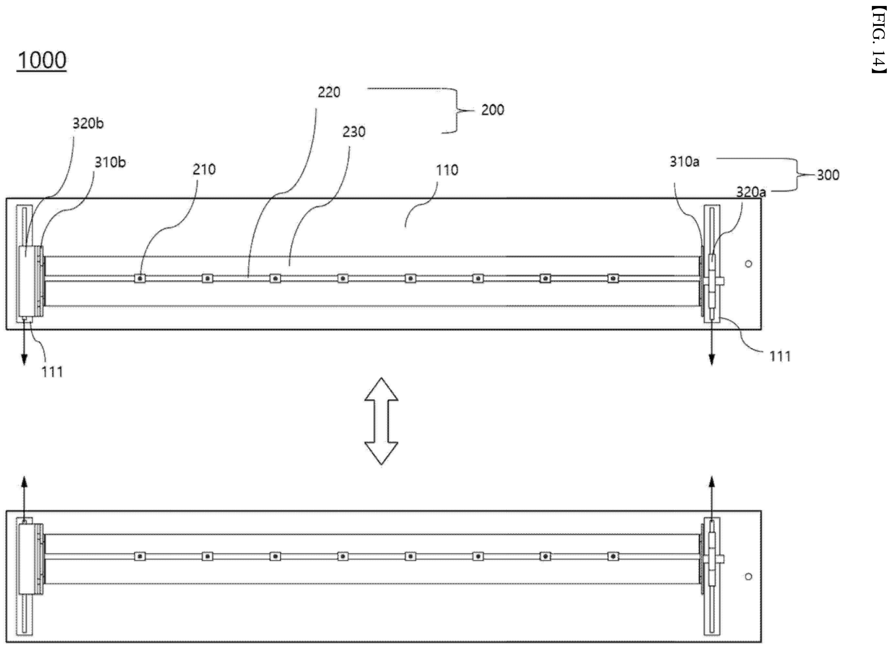

FIG. 14 is a plan view illustrating the horizontal movement of the spraying part 200 and adjusting part 300 included in the water spraying device 1000 of the present disclosure.

The base plate 110 includes guide rails 111 extending along the width direction on its upper portion as shown in FIGS. 1 to 3 and FIG. 14. More specifically, the base plate 110 includes a pair of guide rails 111 corresponding to both end portions of the support plate 230.

The supporter 320 is coupled to the guide rails 111 so as to be slidable in the width direction of the base plate 110.

Therefore, the support plate 230 slides horizontally, dependent on the supporter 320, together with the connecting members 310 connected to both sides of the support plate 230.

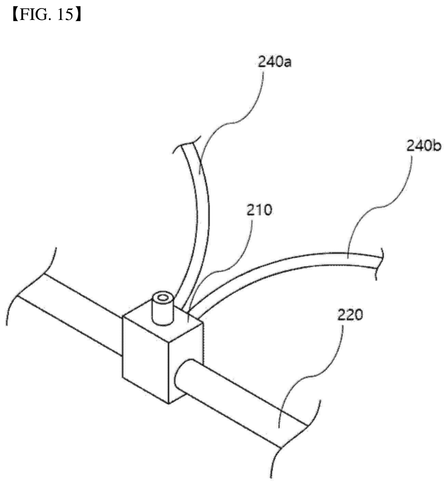

FIG. 15 is a perspective view of the spray nozzle 210 included in the spraying part 200 of the present disclosure.

The water spraying device 1000 of the present disclosure is capable of selectively spraying water and air through a single spray nozzle 210. That is, the spray nozzle 210 of the present disclosure can be connected to at least two or more moving pipes supplying fluid, and a single spray nozzle 210 can selectively spray among the fluids supplied through the plurality of moving pipes.

A water pipe 240a supplying water and an air pipe 240b supplying air are connected to one spray nozzle 210 included in the spraying part 200 as shown in FIG. 15.

The spray nozzle 210 further includes a control valve (not shown) that controls the fluid flow of the water pipe 240a and air pipe 240b, and the spray pattern of water and air can be adjusted by the operation of the control valve.

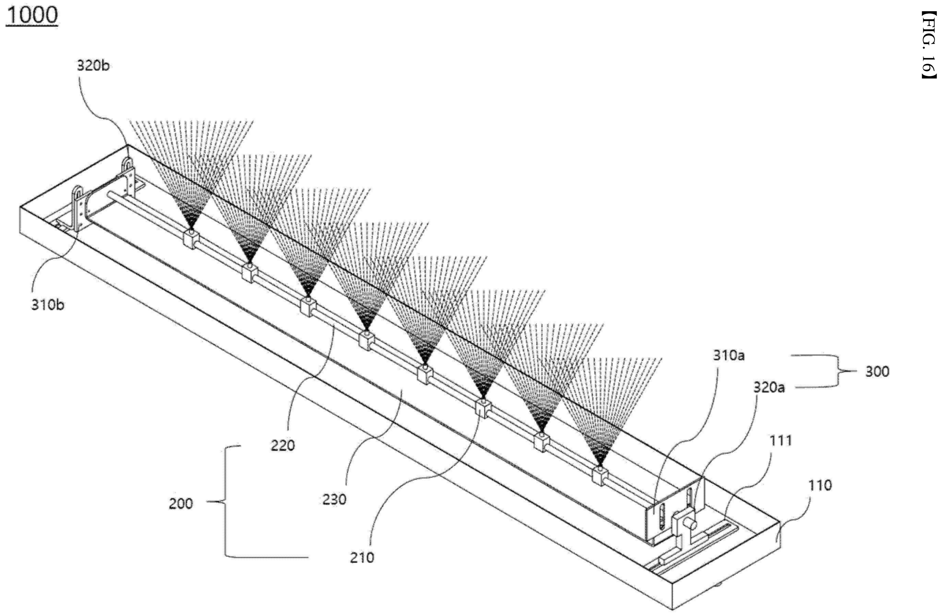

FIG. 16 is an exemplary diagram of the operation of the water spraying device 1000 of the present disclosure.

According to FIG. 16, all spray nozzles 210 have their control valves adjusted to allow only the water pipe 240a to communicate, and therefore only water is being sprayed from each spray nozzle 210. In this case, the humidity can be increased by increasing the amount of moisture in the space where the water spraying device 1000 is located.

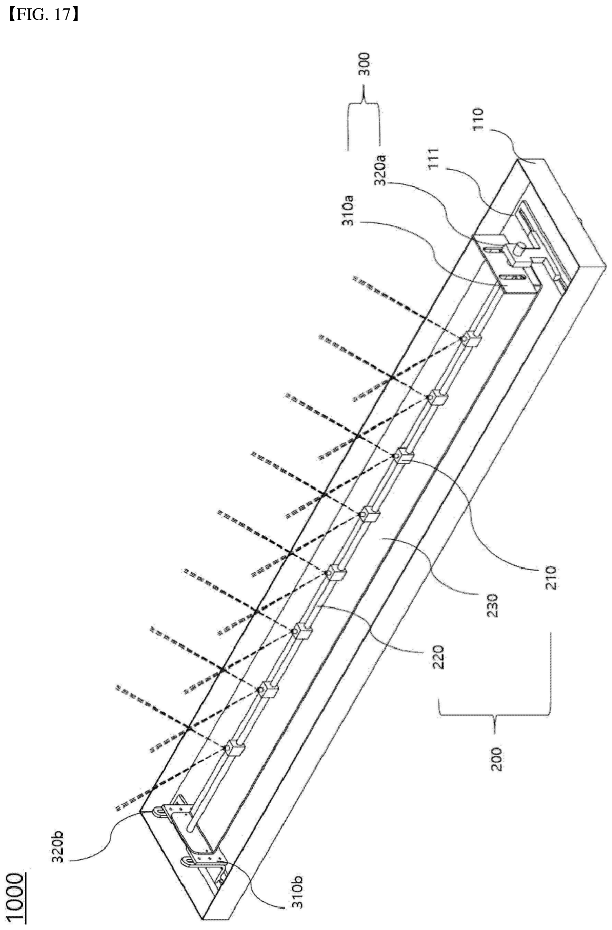

FIG. 17 is another exemplary diagram of the operation of the water spraying device 1000 of the present disclosure.

According to FIG. 17, all spray nozzles 210 have their control valves adjusted to allow only the air pipe 240b to communicate, and therefore only air is being sprayed from each spray nozzle 210. In this case, if there is too much moisture in the space where the water spraying device 1000 is located, the humidity can be decreased by increasing the amount of air spray.

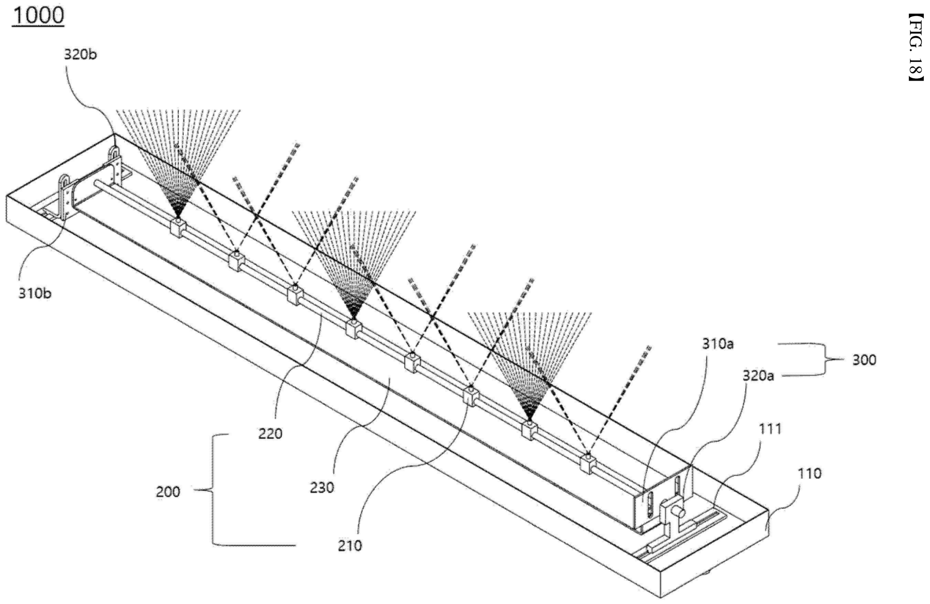

FIG. 18 is yet another exemplary diagram of the operation of the water spraying device 1000 of the present disclosure.

According to FIG. 18, among the plurality of spray nozzles 210, some have their control valves adjusted to allow only the water pipe 240a to communicate, and the rest have their control valves adjusted to allow only the air pipe 240b to communicate. In this case, the amount of water and air being sprayed through a single water spraying device 1000 can be finely adjusted to perform more sensitive humidity control.

### Electrode Drying Device 1

FIG. 19 is a perspective view of the electrode drying device 1 of the present disclosure.

The electrode drying device 1 of the present disclosure performs the function of drying the transported electrode sheet Sh.

The electrode sheet Sh specifically includes a sheet-type current collector and electrode slurry coated on the current collector.

The electrode slurry is included on the upper portion of the electrode sheet Sh in FIG. 19.

The electrode drying device 1 includes an oven main body 2000 and a water spraying device 1000 as shown in FIG. 19. In addition, the electrode drying device 1 of the present disclosure further includes a drying unit 3000 that dries the electrode sheet Sh by transferring high-temperature heat to the electrode sheet Sh.

The drying unit 3000 specifically serves to dry the electrode slurry included on the upper portion of the electrode sheet Sh. Therefore, the drying unit 3000 is preferably located above the electrode sheet Sh inside the oven main body 2000.

FIG. 20 is a schematic diagram briefly illustrating the drying unit 3000 included in the electrode drying device 1 of the present disclosure.

The drying unit 3000 can be applied in various types, and typically, as shown in FIG. 20, it may include at least one of an infrared tube emitting infrared rays and a hot air nozzle emitting hot air.

The oven main body 2000 includes a sheet entrance exit E that is opened for the electrode sheet Sh to pass through.

The sheet entrance exit E is formed on the oven main body 2000 so as to face each other, and the electrode sheet Sh transported in one direction is transported from the sheet entrance exit E formed on one side of the oven main body 2000 to the sheet entrance exit E on the opposite side.

The water spraying device 1000 directly controls the humidity inside the oven main body 2000 to regulate the environment in which the electrode sheet Sh is dried, and also performs the role of cooling by directly spraying water or air onto the electrode sheet Sh.

That is, the water spraying device 1000 directly sprays either water or air onto the electrode sheet Sh passing through the sheet entrance exit E to prevent thermal wrinkles from forming in case excessive heat is transferred to parts of the electrode sheet Sh by the drying unit 3000, etc.

At this time, the area where thermal wrinkles may occur can vary depending on the size and type of the electrode sheet Sh and the output and type of the drying unit 3000. Therefore, the position where water and air are intensively sprayed needs to be adjusted each time, and the electrode drying device 1 of the present disclosure can allow free control of the spray direction as it can move the spray nozzle 210 in all directions.

For example, the spray range of fluid directed toward the electrode sheet Sh can be adjusted by moving the support plate 230 of the water spraying device 1000 in the vertical direction. In addition, fluid can be intensively sprayed on a specific part of the electrode sheet Sh by rotating the support plate 230 or moving it in the horizontal direction.

As aforementioned, the present disclosure has been described in more detail through the drawings, embodiments, and the like. However, since the configuration described in the drawings or embodiments, etc. described herein is merely one embodiment of the present disclosure and does not represent the overall technical spirit of the disclosure, it should be understood that there may be various equivalents, modifications, and substitutions capable of replacing these at the time of filing of this application.

### [Description of Reference Numerals]

1: electrode drying device
1000: water spraying device
2000: oven main body
3000: drying unit
110: base plate
111: guide rail
112: drainage hole
200: spraying part
210: spray nozzle
220: support bar
230: support plate
240a: water pipe
240b: air pipe
300: adjusting part
310: connecting member
310a: first connecting member
310b: second connecting member
320: supporter
320a: first supporter
320b: second supporter
S1: vertical movement slit
S2: arc movement slit
S3: main slit
P1: first fixing pin
P2: second fixing pin
P3: third fixing pin
Ax: rotation axis
Sh: electrode sheet
E: sheet entrance exit

## Claims

1. A water spraying device comprising:
a base part;
a spraying part comprising at least one spray nozzle for spraying fluid; and
an adjusting part that connects the spraying part to the base part and linearly moves and rotationally moves the spraying part with respect to the base part,
wherein the spray nozzle is configured to move horizontally and vertically, or rotate in an arc by the adjusting part.

2. The water spraying device of claim 1, wherein the spraying part comprises:
a support bar extending horizontally;
a support plate that extends along a longitudinal direction of the support bar and has bent end portions; and
the spray nozzle coupled to the support bar.

3. The water spraying device of claim 2, wherein a plurality of spray nozzles is coupled to the single support bar, and
the plurality of spray nozzles are arranged at predetermined intervals along the longitudinal direction of the support bar.

4. The water spraying device of claim 2, wherein the bent end portions of the support plate are coupled to both ends of the support bar.

5. The water spraying device of claim 2, wherein the adjusting part comprises:
a pair of connecting members coupled to both ends of the support plate; and
supporters that connect each connecting member to the base plate.

6. The water spraying device of claim 5, wherein the connecting member comprises a slit extending in a vertical direction, and
the support plate comprises a first fixing pin and a second fixing pin configured to be insertable into the slit of the connecting member at each end portion.

7. The water spraying device of claim 6, wherein the slit comprises a vertical movement slit extending in a straight form and an arc movement slit extending in an arc form, and
the connecting member comprises:
a first connecting member located on one side of the support plate and comprising the vertical movement slit; and
a second connecting member located on the other side of the support plate and comprising the arc movement slit.

8. The water spraying device of claim 7, wherein the supporter comprises:
a first supporter that is axially coupled to the first connecting member; and
a second supporter that is coupled to the second connecting member, wherein
the second supporter comprises a main slit extending in the vertical direction, and
the second connecting member comprises a third fixing pin configured to be insertable into the main slit of the second supporter.

9. The water spraying device of claim 8, wherein the support plate moves in the vertical direction guided by the vertical movement slit of the first connecting member and the main slit of the second supporter, and rotates around a rotation axis guided by the arc movement slit of the second connecting member.

10. The water spraying device of claim 5, wherein the base plate comprises a guide rail extending along a width direction on its upper portion, and the supporter is coupled to the guide rail so as to be slidable in the width direction of the base plate.

11. The water spraying device of claim 1, wherein a water pipe supplying water and an air pipe supplying air are connected to one spray nozzle included in the spraying part, and
the spray nozzle further comprises a control valve that controls a fluid flow of the water pipe and the air pipe.

12. An electrode drying device for drying an electrode sheet, comprising:
an oven main body comprising a sheet entrance exit that is opened for an electrode sheet to pass through; and
the water spraying device of claim 1 that sprays either water or air onto the electrode sheet passing through the sheet entrance exit inside the oven main body.

13. The electrode drying device of claim 12, wherein the oven main body further comprises a drying unit that dries the electrode sheet by transferring high-temperature heat to the electrode sheet.

14. The electrode drying device of claim 13, wherein the drying unit comprises at least one of an infrared tube emitting infrared rays and a hot air nozzle emitting hot air.
